# EUROPÄISCHE PATENTSCHRIFT

(11) **EP 1 923 248 B1**
(45) Veröffentlichungstag und Bekanntmachung des Hinweises auf die Patenterteilung: **09.01.2013**
(21) Anmeldenummer: 07021697.3
(22) Anmeldetag: 08.11.2007
(51) Int. Cl.: B60J 7/12

(54) **Cabriolet-Fahrzeug mit einem aufragenden Säulenteil des Daches**
Convertible vehicle with a roof with a towering column part
Véhicule décapotable doté d'une partie de colonne du toit saillante

(30) Priorität: 18.11.2006 DE 102006054394
(43) Veröffentlichungstag der Anmeldung: 21.05.2008
(73) Patentinhaber: Wilhelm Karmann GmbH, 49084 Osnabrück (DE)
(72) Erfinder: Theuerkauf, Jürgen, 49565 Bramsche (DE)
(74) Vertreter: Kronthaler, Schmidt & Coll.

(56) Entgegenhaltungen:
- EP-A2- 1 398 188
- WO-A1-2005/039907
- WO-A1-2005/039910

## Beschreibung

Die Erfindung betrifft ein Cabriolet-Fahrzeug mit einem Dach, das an jeder Fahrzeugseite einen im geschlossenen Zustand gegen eine Seitenscheibe dichtenden und vom Bereich einer Fensterbrüstungslinie aufragenden Säulenteil umfasst, nach dem Oberbegriff des Anspruchs 1, wie beispielsweise in der WO 2005/039907 beschreiben wird.

Es ist bekannt, einen aufragenden Hauptsäulenteil, an dem der Bezugsstoff eines Softtops gehalten ist und der mit einer über seinen Verlauf erstreckten Dichtungslinie zur Abdichtung gegenüber Seitenscheiben versehen ist, über einen schräg im Fahrzeug liegenden Zugkörper während der Dachöffnungsbewegung insgesamt quer einwärts zu ziehen. Der Zugkörper greift hierfür am unteren Ende des Hauptsäulenteils an und ist als Koppelstange ausgebildet. Diese ist einenends an einem Kugelkopf auf dem Hauptsäulenteil sowie anderenends an einem dem karosserieseitigen Hauptlager zugeordneten Kugelkopf jeweils gelenkig gelagert. Die Quereinwärtsverlagerung dient dazu, einerseits bei geschlossenem Zustand des Daches einen innigen Kontakt des Säulenteils mit einer Dichtung an der Fensterbrüstungslinie und an den Seitenscheiben sicherzustellen und andererseits die Dachbewegung ohne reibenden Kontakt des Säulenteils zu diesen Dichtungen oder anderen Teilen der Fensterbrüstungslinie zu ermöglichen.
Die bekannte Einleitung von Zugkraft über die ganze Bewegung bewirkt eine kontinuierlich gleichmäßige Einwärtsverlagerung des Säulenteils, was häufig den äußeren Gegebenheiten mit einer Überwindung der Fensterbrüstungslinie nur im Anfangsstadium der Öffnungsbewegung nicht gut gerecht wird.

Da das Dach zudem bzgl. seiner Lage zur Karosserie Fertigungstoleranzen aufweist, wird in der Produktion ein Sortiment von verschieden langen Koppelstangen bereitgestellt, aus denen der montierende Arbeiter je nach Relativlage des Daches die passende heraussucht. Dieses Verfahren ist zeitaufwendig und bedingt einen erhöhten logistischen Aufwand. Eine Längeneinstellbarkeit der Zugstangen würde zwar die Zahl der bereitzustellenden Bauteile verringern, jedoch wäre eine solche Einstellung in der laufenden Produktion noch zeitaufwendiger.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1 sowie durch ein Fahrzeugdach mit den Merkmalen des Anspruchs 13. Vorteilhafte Ausgestaltungen und Weiterbildungen der Erfindung sind in den weiteren Ansprüchen 2 bis 12 angegeben.

Dadurch, dass der Säulenteil über seinen Verlauf geteilt ist und einen zumindest über einen Teil der Ablagebewegung des Daches bereichsweise mit einer in Fahrzeugquerrichtung einwärts gerichteten Komponente verlagerbaren unteren Abschnitt aufweist, ist auch ohne Bereitstellung eines Sortiments unterschiedlicher Teile eine an der Fensterbrüstung vorbeiführende Bewegungsbahn des Säulenteils erreichbar. Zudem ist diese Ausweichbewegung ohne Bewegung des ganzen Säulenteils bis oben hin erreichbar, nur ein kleiner unterer Abschnitt muss bewegt werden. Dieser Abschnitt kann vorzugsweise eine Längserstreckung von nur wenigen Zentimetern haben.

Sofern die Einwärtsverlagerung des unteren Abschnitts als Zwangsbewegung bewirkbar ist, ist eine zuverlässige Steuerung ohne Gefahr eines Funktionsausfalls bewirkt.

Besonders vorteilhaft ist hierfür ein der Karosserie zugeordnetes Steuerungsmittel vorgesehen, das insbesondere als Anlaufschräge ausgebildet sein kann. Damit ist auch eine Abweichung von einer kontinuierlichen Quereinwärtsverlagerung möglich, derart, dass am Beginn der Dachöffnungsbewegung direkt die Quereinwärtsverlagerung stattfindet und während der weiteren Dachöffnungsbewegung der Säulenabschnitt einwärtsverschwenkt verbleiben kann. Der quer zu bewegende Teil ist sehr leicht, seine Bewegung kann schnell und ohne Verkantungsgefahr erfolgen.

Insbesondere ist der untere Abschnitt schwenkbar an einen oberen Abschnitt des Säulenteils angehängt. Die Schwenkachse erstreckt sich dann quer zur Erstreckung des Säulenteils, wobei der maximale Einschwenkwinkel des unteren gegenüber dem oberen Abschnitt gering sein kann und zum Beispiel während der Bewegung kleiner als 20°, insbesondere kleiner als etwa 10°, ist. Die Schwenkbewegung des unteren Abschnitts ist dann sehr schnell möglich.

Zur Sicherung einer fluchtend zum oberen Säulenabschnitt stehenden Lage ist vorteilhaft der untere Abschnitt des Säulenteils bei geschlossenem Dach mit einer quer auswärts weisenden Kraftkomponente beaufschlagbar, zum Beispiel durch ein Zugseil oder eine ähnliche mit dem Dach verbundene Kopplung.

Dabei ist es besonders günstig, wenn das Steuerungsmittel an einem Hauptlager der Dachbewegung anmontiert und als Teil eines Dachmoduls vor dessen Einbau in einen Rohbau der Karosserie gegenüber dem Dach ausrichtbar ist. Dann kann die bereits fertig ausgerichtete Einheit vor Einbau in den Rohbau auf Funktion getestet werden; der Einbau kann dann am Band ohne Zeitaufwendung für einen Toleranzausgleich erfolgen.

Die Bewegung des unteren Abschnitts des Säulenteils ist erleichtert, wenn dieser bei geschlossenem Dach nur in seinem oberen Teil von einem eine Dachaußenfläche bildenden Bezug übergriffen ist. Beim Einschwenken wirkt dann nur eine geringe Zugkraft auf den Bezug.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine schematische, perspektivische und nach vorne abgebrochene Ansicht von schräg vorne des hinteren und bzgl. der Fahrtrichtung linken Fahrzeugbereichs eines erfindungsgemäßen Cabriolet-Fahrzeugs bei geschlossenem Dach, von dem hier nur ein Teil des Dachgestänges ohne übergreifenden Bezug dargestellt ist,
- Fig. 2: eine herausgezeichnete Darstellung der Teile des Daches und der Dachbewegungsmechanik in Stellung nach Fig. 1, jedoch ohne umgebende Karosserieteile,
- Fig. 3: eine Ansicht von schräg rechts vorne auf die Teile nach Fig. 1 in geschlossener Dachstellung,

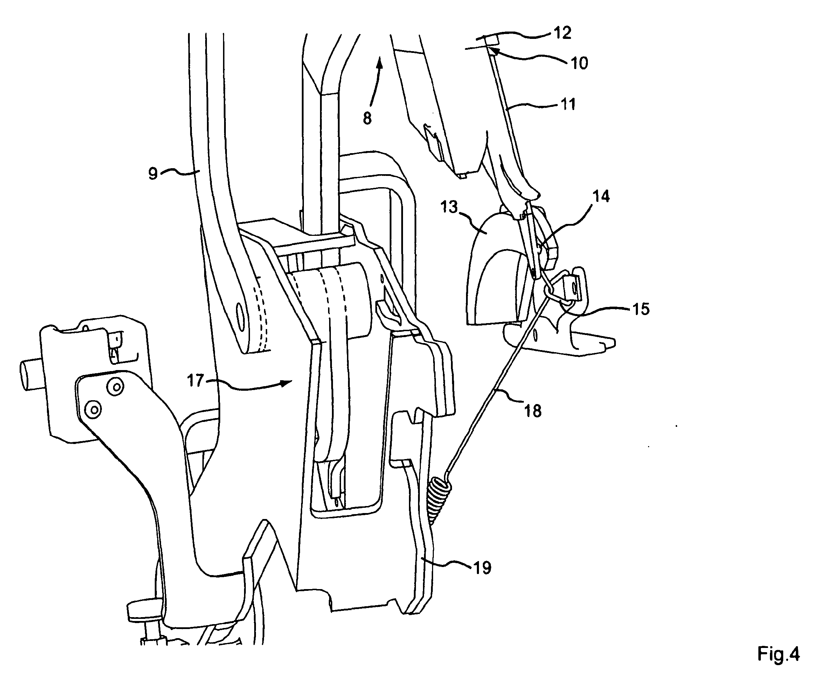

- Fig. 4: eine herausgezeichnete Darstellung der Teile des Daches und der Dachbewegungsmechanik in Stellung nach Fig. 3, jedoch ohne umgebende Karosserieteile,

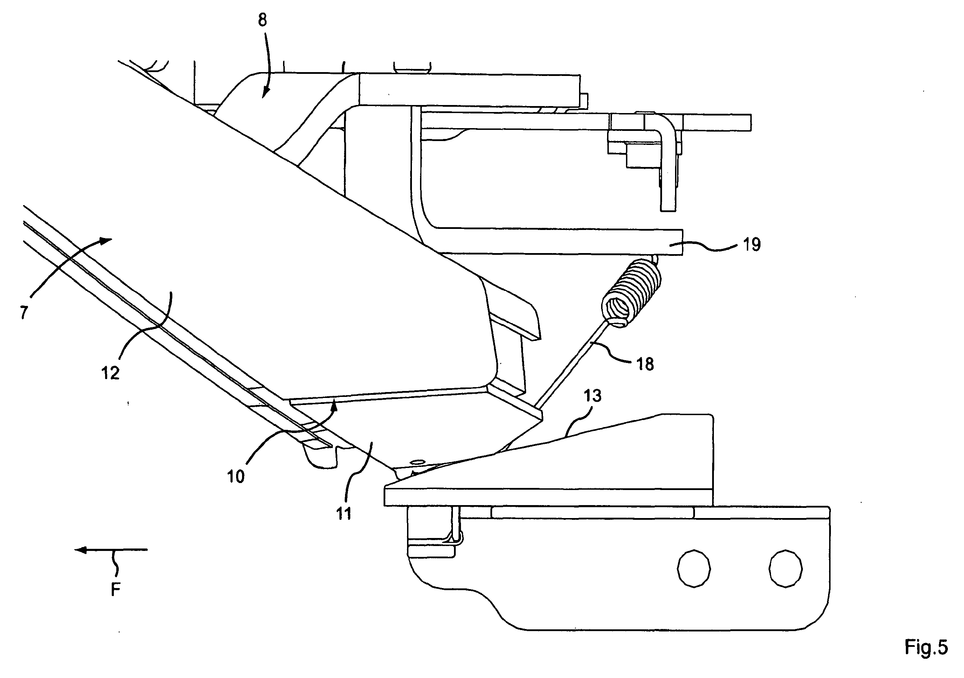

- Fig. 5: eine Draufsicht auf die Teile nach Fig. 2 in geschlossener Dachstellung,

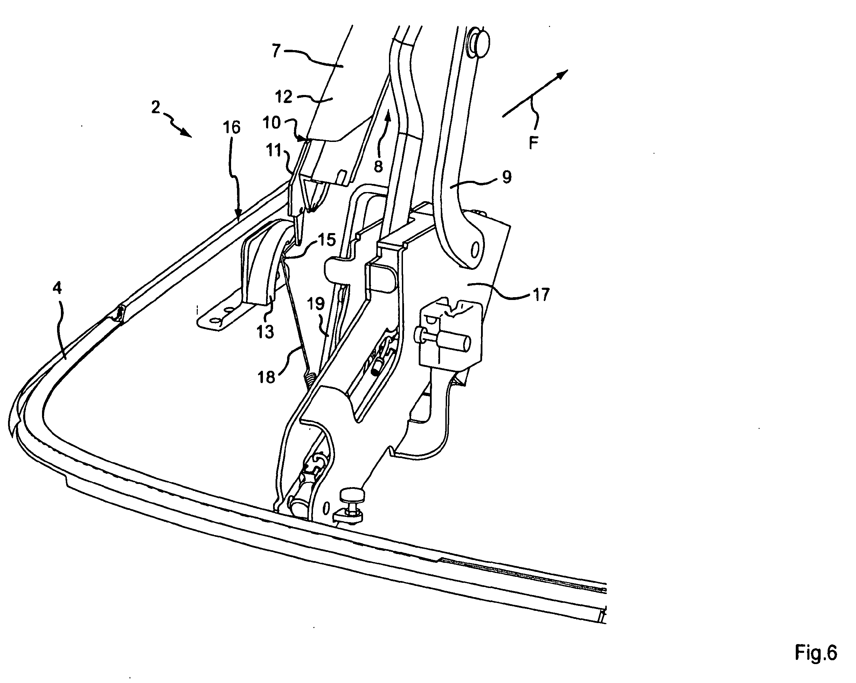

- Fig. 6: eine Ansicht von schräg hinten auf den hinteren Dachbereich (ohne Bezug) und die Dachbewegungsmechanik in geschlossener Dachstellung,

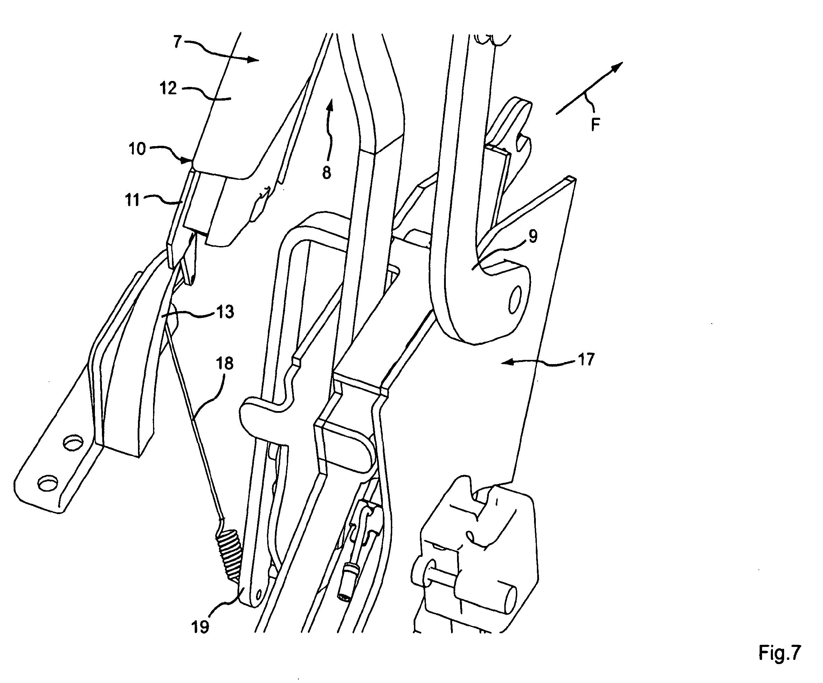

- Fig. 7: eine herausgezeichnete Darstellung der Teile der Dachbewegungsmechanik nach Fig. 5 in Ansicht von schräg hinten bei geschlossenem Dach,

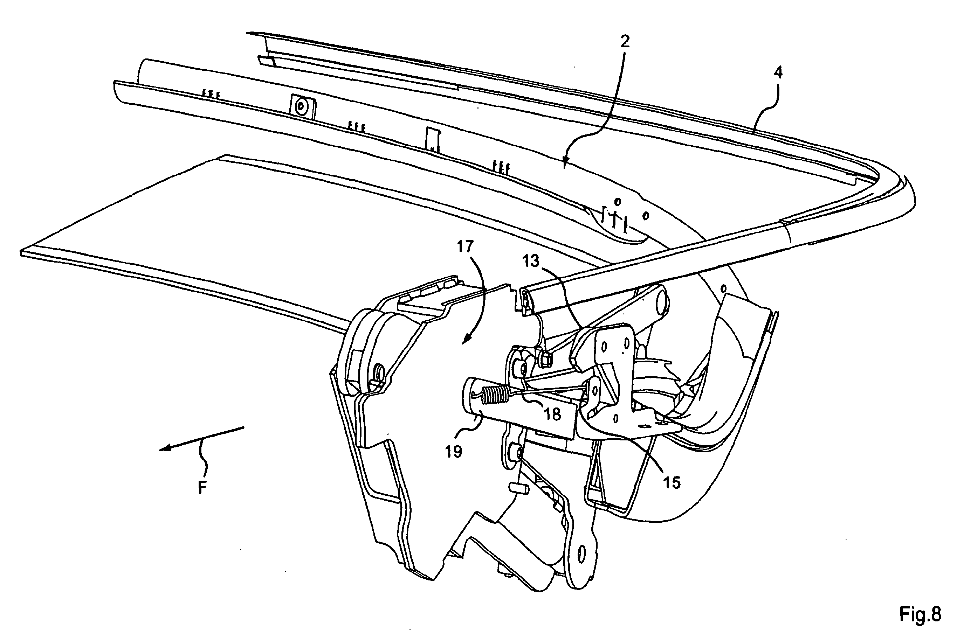

- Fig. 8: eine ähnliche Ansicht wie Fig. 1, jedoch bei geöffnetem Dach,

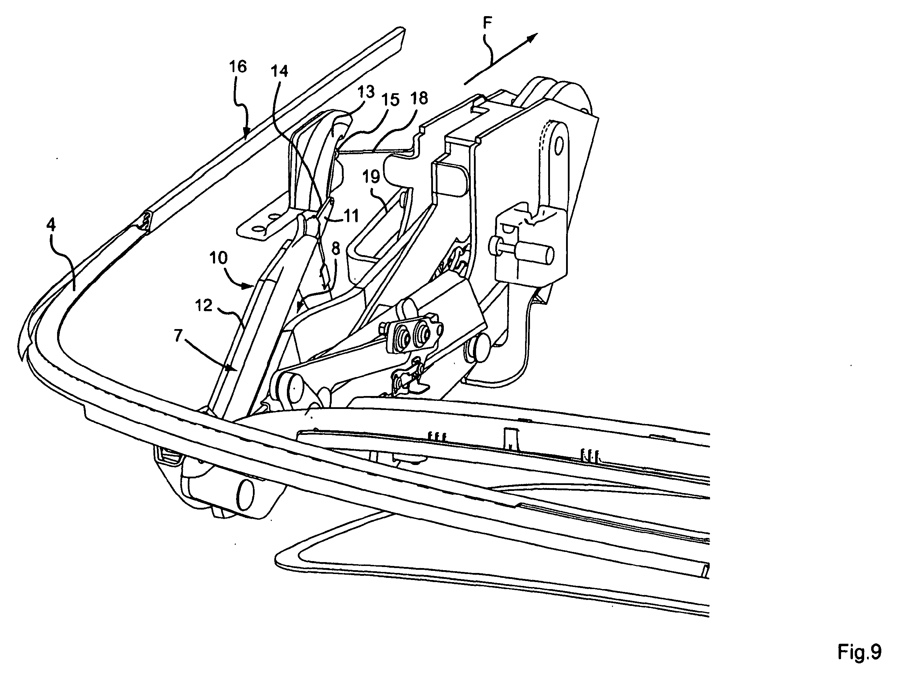

- Fig. 9: eine Ansicht von schräg hinten auf die seitliche Bewegungsmechanik bei geöffnetem Dach nach Fig. 8,

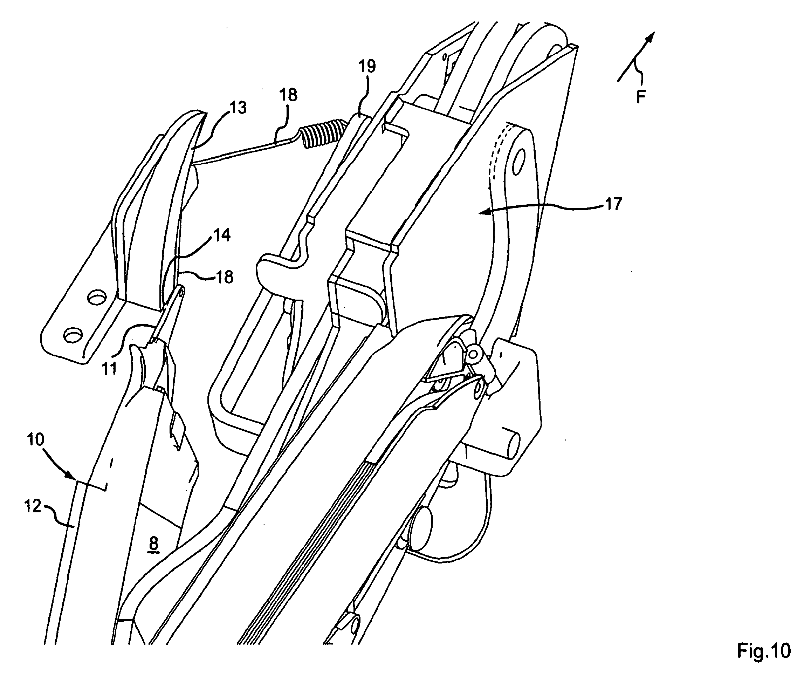

- Fig. 10: eine Detailvergrößerung der Dachbewegungsmechanik in Fig. 9,

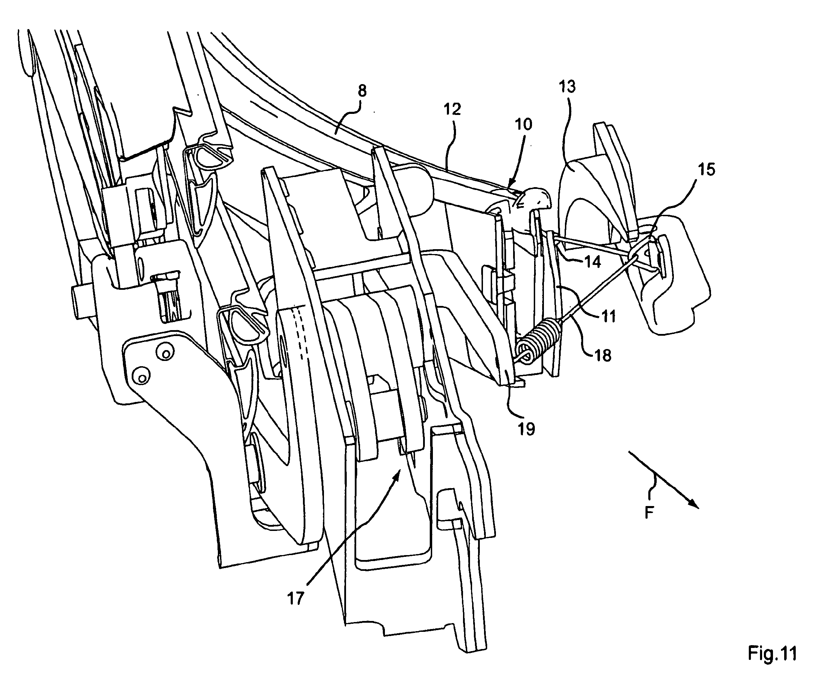

- Fig. 11: die Teile nach Fig. 10 in Ansicht von schräg vorne,

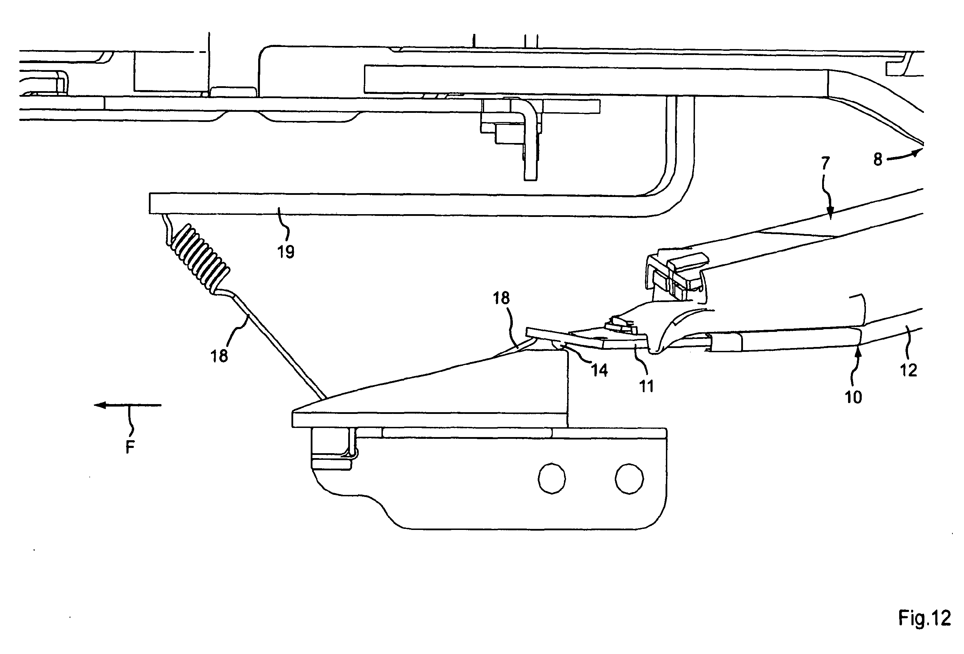

- Fig. 12: eine Draufsicht auf die Teile nach Fig. 11 bei geöffnetem Dach,

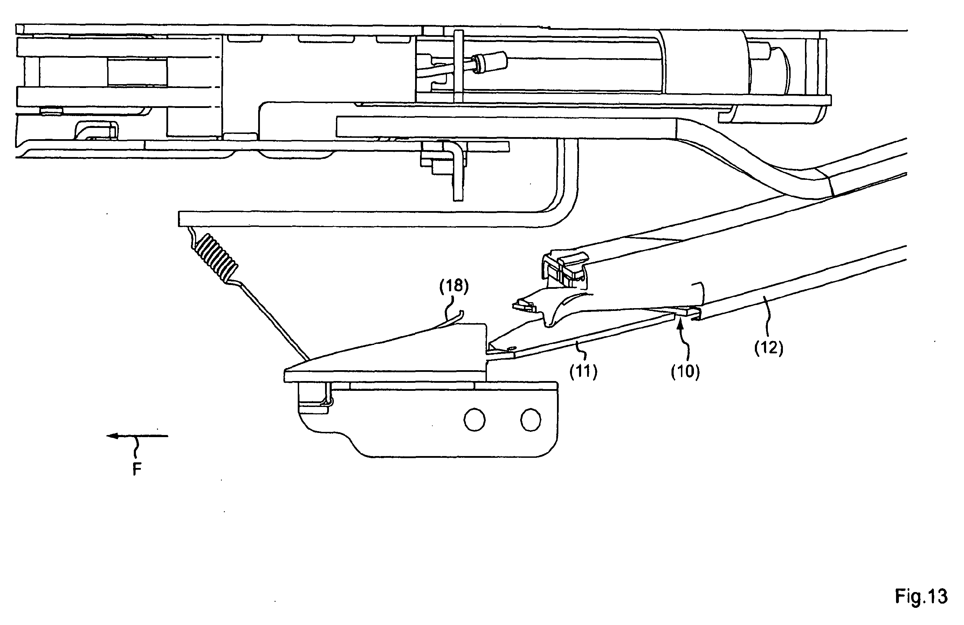

- Fig. 13: eine - vergleichende - ähnliche Ansicht wie Fig. 12, jedoch ohne die Möglichkeit des Einknickens des unteren Abschnitts des Säulenteils, so dass eine weiter außen liegende Endstellung des unteren Säulenabschnitts mit der Gefahr von Kollisionen mit weiteren Teilen des Fahrzeugs resultieren würde,

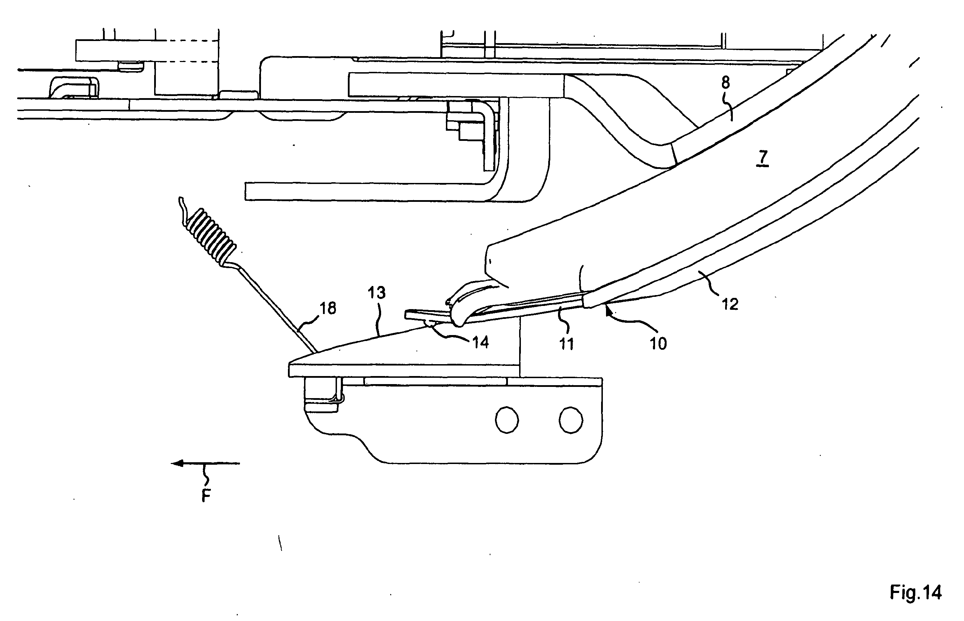

- Fig. 14: eine ähnliche Draufsicht wie Fig. 12 während des Schließens des Daches.

Ein erfindungsgemäße Cabriolet-Fahrzeug 1 kann entweder als mit zumindest einer Rückbank versehenes vier- oder mehrsitziges Fahrzeug oder als Zweisitzer ausgebildet sein.

Im Ausführungsbeispiel bildet das bewegliche und in geschlossener Stellung mittelbar oder unmittelbar an einen Windschutzscheibenrahmen (nicht gezeichnet) anschließende Dach 2 ein insgesamt mit einem durchgehenden Bezug überzogenes Soft-Top aus und kann manuell oder voll- oder teilautomatisch zu bewegen sein.

Das Dach 2 ist zu seiner Öffnung im hinteren Fahrzeugbereich ablegbar. Hierzu ist eine Eintrittsöffnung in die Karosserie 3 vorgesehen, die bei Öffnung des Daches 2 von diesem ganz oder teilweise durchlaufen wird. Im vorliegenden Ausführungsbeispiel ist das Dach 2 über eine sog. Z-Faltung in der Karosserie 3 ablegbar, wobei das im geschlossenen Zustand mit einem Windschutzscheibenrahmen verbundene vordere Dachende seine Orientierung im abgelegten Zustand beibehält, also auch in abgelegter Stellung mit der Außenseite nach oben weist. Dies ist jedoch nicht zwingend.

In der Zeichnung ist ein sog. Softtop mit einem in Draufsicht in etwa U-förmigen hinteren Randabschluss 4 unterhalb einer Heckscheibe 5 vorgesehen. Ein erfindungsgemäßes Cabriolet-Fahrzeug 1 kann ohne hinteren Spannbügel und ohne einen Verdeckkastendeckel auskommen. Im Bereich des Dachabschlusses 4 ist das Dach 2 kann mit dem hinteren Rand seines Bezugs an der Karosserie 3 festgelegt.

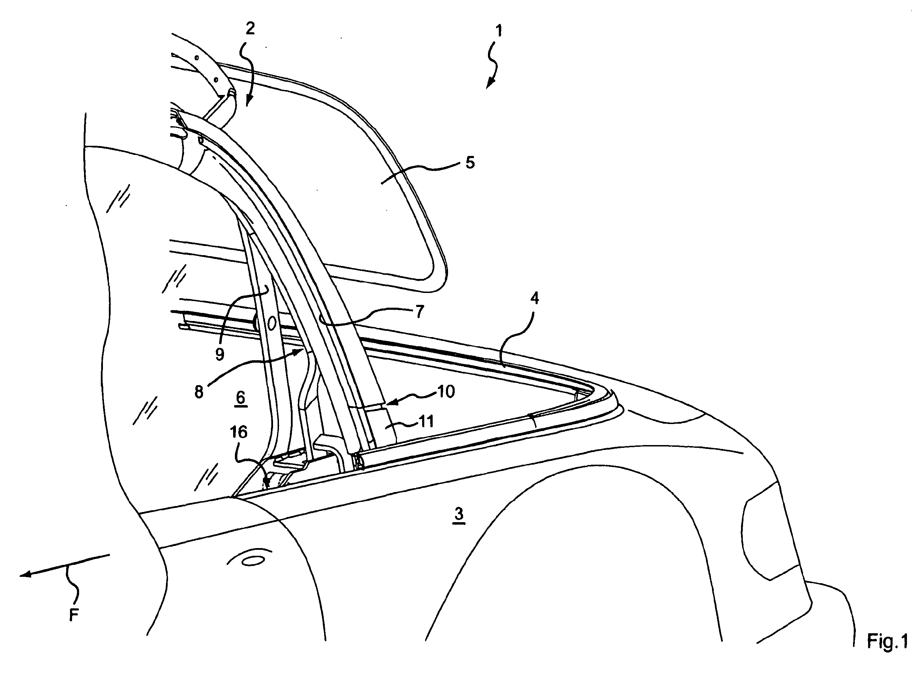

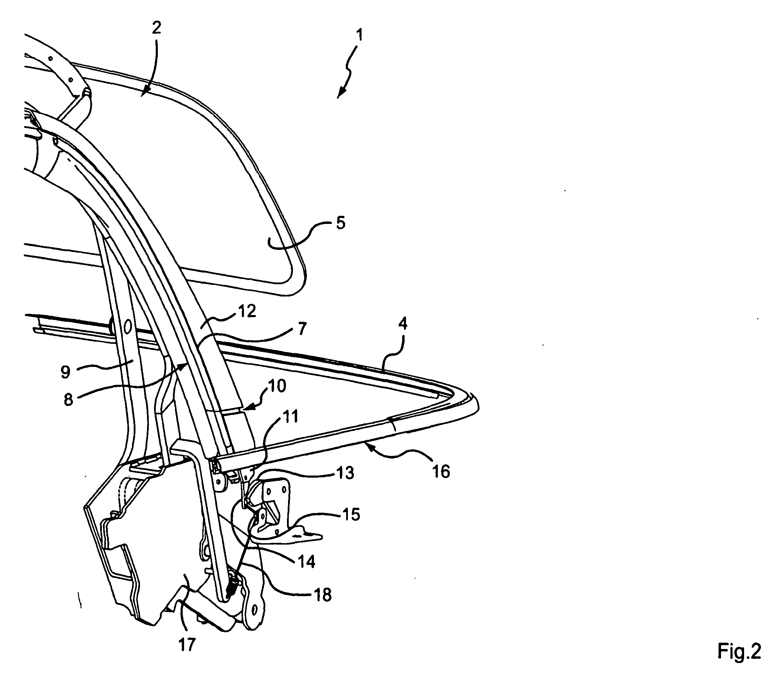

An jeder Fahrzeugseite (in Figur 1 ist der bezüglich der Fahrtrichtung F linke Teil dargestellt) weist das Dach 2 einen im geschlossenen Zustand gegen eine Seitenscheibe 6 dichtende und vom Bereich einer Fensterbrüstungslinie 16 aufragenden Säulenteil 7 auf. Dieser Säulenteil 7 ist Bestandteil einer mehrteiligen Hauptsäule 8, die zur Dachöffnung insgesamt heckwärts und abwärts und verlagerbar, zum Beispiel schwenkbar, ist. Die Hauptsäule 8 bildet üblicherweise einen Teil eines noch einen zweiten aufragenden Schwenklenker 9 umfassenden Schwenkparallelogramms - oder zumindest Viergelenks - für die Dachbewegung. Die Hauptsäule 8 kann bei geschlossenem Dach 2 (Fig. 1) auf der Fensterbrüstungslinie 16 aufstehen oder etwas unterhalb von dieser enden, wie insbesondere in der Darstellung nach Fig. 2 ohne umgebende Karosserieteile zu erkennen ist.

Der Säulenteil 7 ist in sich über seinen Längsverlauf im unteren Bereich an einer Querfuge 10 geteilt, wobei der untere Abschnitt 11 des Säulenteils 7 bei der heckwärts gerichteten Ablagebewegung mit einer Komponente quer zum Fahrzeug 1 einwärts verlagerbar ist. Der obere Abschnitt 12 kann hingegen ohne Relativbeweglichkeit zur Struktur der Hauptsäule 7 auskommen.

Hier bildet die Quereinwärtsverlagerung eine mechanisch einfach zu realisierende Schwenkbewegung mit nur einem Freiheitsgrad gegenüber dem oberen Abschnitt 12 im wesentlichen um die Querfuge 10 aus, wobei dieses Quereinwärtsverschwenken dem Heckwärtsverschwenken der gesamten Hauptsäule 8 überlagert ist.

Dadurch wird während der Öffnung des nach oben verjüngenden Daches 2 im unteren Bereich der Säulenteile 7 die Dachbreite verkleinert. Es ist somit einfach ermöglicht, das sich öffnende Dach auch mit seinen im geschlossenen Zustand breitesten Anteilen bei der Dachöffnung innen an der Fensterbrüstungslinie 16 vorbeizuführen.

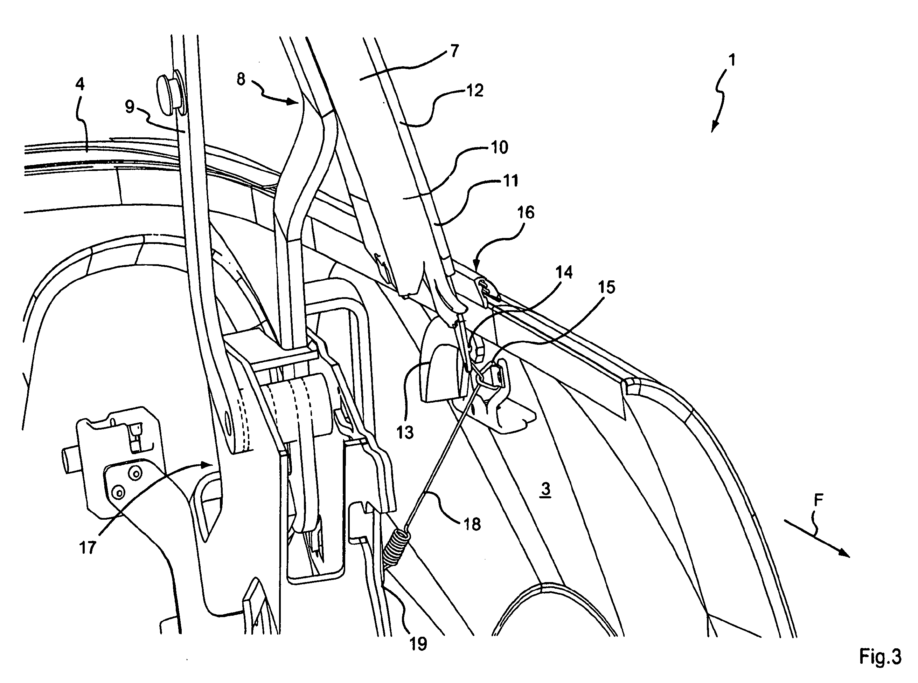

Der untere Abschnitt 11 benötigt für seine Einwärtsverlagerung keine eigene Steuerung, sondern ist zwangsweise bei der Dachöffnung mit einwärts verlagerbar. Eine Fehlbedienung ist ausgeschlossen. Für diese Zwangsbewegung ist als Steuerungsmittel 13 eine der Karosserie 3 zugeordnete Anlaufschräge vorgesehen. Diese ist in Seitenansicht kreissegmentförmig (Fig. 3) und weist eine sich nach unten hin zur Fahrzeugmitte hin erweiternde Schräge als Führungsfläche für einen kurzen Zapfen oder anderen Führungsansatz 14 am freien Ende des verlagerbaren Abschnitts 11 auf. Dieser Zapfen 14 ist - für die Kraftbeaufschlagung sehr günstig - quer auswärts gerichtet, gleitet beim Aufschwenken des Säulenteils 7 automatisch auf der Anlaufschräge 13 abwärts und wird nach quer innen kraftbeaufschlagt. Abweichend von der Zeichnung, muss die Anlaufschräge 13 keine gleichmäßige Steigung aufweisen, sondern kann zum Beispiel im oberen Anfangsbereich dem Zapfen 14 eine stärkere Einwärtsverlagerung erteilen als über den weiteren Verlauf. Die Anlaufschräge 13 kann mit einer reibungsvermindernden Beschichtung, zum Beispiel einer PDFE-Beschichtung, versehen sein.

Die Anlaufschräge 13 weist eine große Lauffläche auf, so dass die Toleranzen in der Relativlage zum Zapfen 14 erheblich sein können, wodurch die Ausrichtung vereinfacht ist. Eine den Zapfen 14 einfassende Führungsbahn, die eine höhere Führungsgenauigkeit erfordern würde, ist entbehrlich.

Die Zuordnung der Anlaufschräge 13 zur Karosserie 3 bedeutet nicht, dass diese an der Karosserie 3 direkt angesetzt werden muss. Vielmehr kann das Steuerungsmittel 13 am Hauptlager 17 gehalten sein, so dass ein modularer Aufbau möglich ist und eine exakte Ausrichtung bereits vor Einsetzen des Daches 2 in einen Rohbau der Karosserie 3 möglich ist. Die Anlaufschräge 13 kann vorab relativ zum Dach 2 ausgerichtet und vollständig ausgerichtet auf Funktion getestet werden.

Der maximale Einschwenkwinkel des unteren Abschnitts 11 gegenüber dem oberen Abschnitt 12 des Säulenteils 7 ist nur gering und beträgt während der Öffnungsbewegung weniger als 20°, vorzugsweise weniger als 10°. Es ist bei ansonsten gleichartiger Ausbildung möglich, den Einschwenkwinkel lediglich über die Steigung der Anlaufschräge 13 zu variieren. Auch eine Anpassung an verschiedene Fahrzeugtypen ist daher einfach möglich.

Entgegen der Kraftbeaufschlagung durch die Anlaufschräge 13 wirkt auf den unteren Abschnitt 11 des Säulenteils 7 schon bei geschlossenem Dach 2 eine Kraft mit einer quer auswärts weisenden Kraftkomponente, hier erreicht durch eine an einer karosserieseitigen Öse 15 umgelenkte Zugfeder 18. Diese greift am freien Ende des Abschnitts 11 an. Mit ihrem dem Zapfen 14 entgegengesetzten Ende ist sie hingegen als Kopplung mit einem Lenker 19 des Daches 2 am Hauptlager 17 gehalten, wobei dieser Lenker 19 bei der Dachöffnung umschwenkt. Dadurch verringert sich diese auswärts gerichtete Kraftbeaufschlagung während der Dachablage und behindert die Quereinwärtsverlagerung des unteren Abschnitts 11 nicht.

Um die Beweglichkeit des unteren Abschnitts 11 des Säulenteils 7 zu vereinfachen, ist dieser bei geschlossenem Dach 2 nur in seinem oberen Teil von einem eine Dachaußenfläche bildenden Bezug übergriffen. Zudem muss der Bezug nicht direkt am unteren Abschnitt 11 festgelegt sein. Eine zu große Dehnung des Bezugs ist dabei ausgeschlossen. Auch muss der untere Abschnitt 11 des Säulenteils 7 bei geschlossenem Dach 2 nicht vollständig oberhalb der ungefähr horizontalen Fensterbrüstungslinie 16 enden, sondern kann teilweise oberhalb und teilweise unterhalb dieser verlaufen. Dann ist auch das Enden des Bezugs oberhalb des unteren Abschlusses des Abschnitts 11 optisch unschädlich.

Mit der Erfindung ist es in jedem Fall entbehrlich, zum Toleranzausgleich ein Sortiment mit unterschiedlichen Zuggliedern oder anderen Steuermitteln für die Querverlagerung bereitstellen zu müssen. Die Montage ist dadurch schnell möglich. Die Ausrichtungsmöglichkeit am Dachmodul vor Einbau in die Karosserie bedeutet einen zusätzlichen Montagevorteil, da dann bei Einsetzen des Dachmoduls in den Rohbau keinerlei Ausrichtungsarbeiten mehr erforderlich sind, was die Montagezeit weiter verkürzt.

## Patentansprüche

1. Cabriolet-Fahrzeug (1) mit einem ablegbaren Dach (2), das an jeder Fahrzeugseite einen im geschlossenen Zustand gegen eine Seitenscheibe (6) dichtende und vom Bereich einer Fensterbrüstungslinie (16) aufragenden Säulenteil (7) umfasst, der zur Dachöffnung insgesamt heckwärts und abwärts und verlagerbar ist
**dadurch gekennzeichnet,**
**dass** der Säulenteil (7) über seinen Verlauf geteilt ist und einen zumindest über einen Teil der Öffnungsbewegung des Daches (2) bereichsweise mit einer in Fahrzeugquerrichtung einwärts gerichteten Komponente verlagerbaren unteren Abschnitt (11) aufweist.

2. Cabriolet-Fahrzeug (1) nach Anspruch 1,
**dadurch gekennzeichnet,**
**dass** die Einwärtsverlagerung des unteren Abschnitts (11) als Zwangsbewegung bewirkbar ist.

3. Cabriolet-Fahrzeug (1) nach Anspruch 2,
**dadurch gekennzeichnet,**
**dass** zur Führung der Einwärtsbewegung ein der Karosserie (3) zugeordnetes Steuerungsmittel (13) vorgesehen ist.

4. Cabriolet-Fahrzeug (1) nach Anspruch 3,
**dadurch gekennzeichnet,**
**dass** das Steuerungsmittel (13) als Anlaufschräge ausgebildet ist.

5. Cabriolet-Fahrzeug (1) nach einem der Ansprüche 1 bis 4,
**dadurch gekennzeichnet,**
**dass** der untere Abschnitt (11) schwenkbar an einen oberen Abschnitt des Säulenteil (7) angehängt ist.

6. Cabriolet-Fahrzeug (1) nach Anspruch 5,
**dadurch gekennzeichnet,**
**dass** der maximale Einschwenkwinkel des unteren (11) gegenüber dem oberen Abschnitt während der Bewegung kleiner als 20° ist.

7. Cabriolet-Fahrzeug (1) nach einem der Ansprüche 1 bis 6,
**dadurch gekennzeichnet,**
**dass** der untere Abschnitt (11) des Säulenteils (7) bei geschlossenem Dach (2) mit einer quer auswärts weisenden Kraftkomponente beaufschlagt ist.

8. Cabriolet-Fahrzeug (1) nach Anspruch 7,
**dadurch gekennzeichnet,**
**dass** die auswärts gerichtete Kraftbeaufschlagung über eine mit dem Dach (2) verbundene und bei der Dachablage kraftverringernde Kopplung (18) eintragbar ist.

9. Cabriolet-Fahrzeug (1) nach einem der Ansprüche 1 bis 8,
**dadurch gekennzeichnet,**
**dass** der Säulenteil (7) zur Dachöffnung nach hinten schwenkbar ist.

10. Cabriolet-Fahrzeug (1) nach einem der Ansprüche 3 bis 9,
**dadurch gekennzeichnet,**
**dass** das Steuerungsmittel (13) an einem Hauptlager (17) der Dachbewegung anmontiert und als Teil eines Dachmoduls vor dessen Einbau in einen Rohbau der Karosserie (3) relativ zum Dach (2) ausrichtbar ist.

11. Cabriolet-Fahrzeug (1) nach einem der Ansprüche 1 bis 10,
**dadurch gekennzeichnet,**
**dass** der untere Abschnitt (11) des Säulenteils (7) bei geschlossenem Dach (2) nur in seinem oberen Teil von einem eine Dachaußenfläche bildenden Bezug übergriffen ist.

12. Cabriolet-Fahrzeug (1) nach einem der Ansprüche 1 bis 11,
**dadurch gekennzeichnet,**
**dass** der untere Abschnitt (11) des Säulenteils (7) bei geschlossenem Dach (2) teilweise oberhalb und teilweise unterhalb einer im wesentlichen horizontalen seitlichen Fensterbrüstungslinie (16) des Fahrzeugs (1) verläuft.

13. Fahrzeugdach (2) für ein Cabriolet-Fahrzeug (1) nach einem der Ansprüche 1 bis 12.

## Claims

1. A convertible vehicle (1) comprising a roof (2), which can be stowed and has a column part (7) on each vehicle side, said column part (7) rising up from the area of a window sill line (16) and sealing a side window (6) in the closed state, and said column part (7) being movable to the rear and down in order to open the roof as a whole,
**characterised in that**
the column part (7) is divided over its extension and comprises a lower portion (11) which can be moved in some areas with an inward component in the transverse vehicle direction over at least part of the opening movement of the roof (2).

2. The convertible vehicle (1) according to claim 1, **characterised in that** the inward movement of the lower portion (11) can be effected as a compulsory movement.

3. The convertible vehicle (1) according to claim 2, **characterised in that** a control means (13) assigned to the vehicle body (3) is provided to guide said inward movement.

4. The convertible vehicle (1) according to claim 3, **characterised in that** the control means (13) is provided as a bevel.

5. The convertible vehicle (1) according to any one of claims 1 to 4, **characterised in that** the lower portion (11) is attached to an upper portion of the column part (7) in a pivoting manner.

6. The convertible vehicle (1) according to claim 5, **characterised in that** the maximum inward pivoting angle of the lower portion (11) with respect to the upper portion is less than 20° during said movement.

7. The convertible vehicle (1) according to any one of claims 1 to 6, **characterised in that** the lower portion (11) of the column part (7) is subjected to a transversely outward force component when the roof (2) is closed.

8. The convertible vehicle (1) according to claim 7, **characterised in that** the outwardly acting force can be introduced via a coupling (18), which is connected to the roof (2) and has a force-reducing effect during roof stowage.

9. The convertible vehicle (1) according to any one of claims 1 to 8, **characterised in that** the column part (7) can be pivoted to the rear to open the roof.

10. The convertible vehicle (1) according to any one of claims 3 to 9, **characterised in that** the control means (13) is mounted to a main bearing (17) for the roof movement and can be aligned with the roof (2), as part of a roof module before installation of the latter into a shell of the vehicle body (3).

11. The convertible vehicle (1) according to any one of claims 1 to 10, **characterised in that**, when the roof (2) is closed, the lower portion (11) of the column part (7) is covered only in its upper part by a cover forming an external roof surface.

12. The convertible vehicle (1) according to any one of claims 1 to 11, **characterised in that**, when the roof (2) is closed, the lower portion (11) of the column part (7) extends partly above and partly below a substantially horizontal lateral window-sill line (16) of the vehicle (1).

13. A vehicle roof (2) for a convertible vehicle (1) according to any one of claims 1 to 12.

## Revendications

1. Véhicule cabriolet (1) avec un toit (2) escamotable comprenant, de chaque côté dudit véhicule, une partie de montant (7) qui, à l'état fermé, étanche une vitre latérale (6) et s'étend vers le haut à partir de la région d'une ligne de caisse (16), ladite partie de montant (7) étant déplaçable vers l'arrière et vers le bas pour ouvrir ledit toit en tout,
**caractérisé en ce que**
la partie de montant (7) est divisée le long de son étendue et comprend une partie inférieure (11) déplaçable, pendant au moins une partie du mouvement d'ouverture du toit (2), en partie avec une composante tournée vers l'intérieur, en direction transversale du véhicule.

2. Véhicule cabriolet (1) selon la revendication 1, **caractérisé en ce que** le mouvement vers l'intérieur de la partie inférieure (11) peut s'effectuer en tant que mouvement forcé.

3. Véhicule cabriolet (1) selon la revendication 2, **caractérisé en ce que** l'on prévoit un moyen de commande (13) associé avec la carrosserie (3) pour guider ledit mouvement vers l'intérieur.

4. Véhicule cabriolet (1) selon la revendication 3, **caractérisé en ce que** le moyen de commande (13) est réalisé sous forme d'un biseau de butée.

5. Véhicule cabriolet (1) selon l'une quelconque des revendications 1 à 4, **caractérisé en ce que** la partie inférieure (11) est attachée de manière pivotante à une partie supérieure de la partie de montant (7).

6. Véhicule cabriolet (1) selon la revendication 5, **caractérisé en ce que** l'angle maximum de pivotement vers l'intérieur de la partie inférieure (11) par rapport à la partie supérieure est de moins de 20° pendant ledit mouvement.

7. Véhicule cabriolet (1) selon l'une quelconque des revendications 1 à 6, **caractérisé en ce que** la partie inférieure (11) de la partie de montant (7) est soumise à une composante de force dirigée transversalement vers l'extérieur lorsque le toit (2) est fermé.

8. Véhicule cabriolet (1) selon la revendication 7, **caractérisé en ce que** la force dirigée vers l'extérieur peut être introduite au moyen d'un couplage (18) qui est relié au toit (2) et produit un effet de réduction de force pendant le rangement du toit.

9. Véhicule cabriolet (1) selon l'une quelconque des revendications 1 à 8, **caractérisé en ce que** la partie de montant (7) peut pivoter vers l'arrière pour ouvrir le toit.

10. Véhicule cabriolet (1) selon l'une quelconque des revendications 3 à 9, **caractérisé en ce que** le moyen de commande (13) est monté sous forme d'un palier principal (17) pour le mouvement du toit et, faisant partie d'un module de toit, peut être aligné par rapport au toit (2) avant l'installation dudit module dans une coque de la carrosserie (3).

11. Véhicule cabriolet (1) selon l'une quelconque des revendications 1 à 10, **caractérisé en ce que**, lorsque le toit (2) est fermé, la partie inférieure (11) de la partie de montant (7) est couverte seulement dans sa partie supérieure par une enveloppe constituant une face extérieure du toit.

12. Véhicule cabriolet (1) selon l'une quelconque des revendications 1 à 11, **caractérisé en ce que**, lorsque le toit (2) est fermé, la partie inférieure (11) de la partie de montant (7) s'étend partiellement au-dessus et partiellement au-dessous d'une ligne de caisse (16) latérale, sensiblement horizontale, du véhicule (1).

13. Toit de véhicule (2) pour un véhicule cabriolet (1) selon l'une quelconque des revendications 1 à 12.
